# FASCICULE DE BREVET EUROPEEN

(11) **EP 2 303 538 B1**
(45) Date de publication et mention de la délivrance du brevet: **25.06.2014**
(21) Numéro de dépôt: 09784445.0
(22) Date de dépôt: 29.06.2009
(51) Int. Cl.: B29C 45/14, B62D 29/00, B21D 5/00

(54) **MOULE ET PROCEDE DE FABRICATION D'UNE PIECE AUTOMOBILE PARTIELLEMENT RECOUVERTE DE PLASTIQUE**
FORM UND VERFAHREN ZUR HERSTELLUNG EINES TEILWEISE IN KUNSTSTOFF EINGEHÜLLTEN AUTOMOBILTEILS
MOLD AND METHOD FOR MANUFACTURING AN AUTOMOBILE PART PARTIALLY COVERED IN PLASTIC

(30) Priorité: 30.06.2008 FR 0854408
(43) Date de publication de la demande: 06.04.2011
(73) Titulaire: Compagnie Plastic Omnium, 69007 Lyon (FR)
(72) Inventeur: BALLESTEROS, Fernando, F-69006 Lyon (FR); CHENE, Anthony, F-01640 Jujurieux (FR)
(74) Mandataire: Remy, Vincent Noel Paul
(86) Numéro de dépôt international: PCT/FR2009/051255
(87) Numéro de publication internationale: WO 2010/004185

(56) Documents cités:
- DE-U1-202005 009 812
- JP-A- 55 027 251
- US-A1- 2004 232 591
- US-A1- 2007 131 012
- STRASSER F ET AL: "Stanzteile zum Einbetten in Kunststoffteile" KUNSTSTOFFE, CARL HANSER VERLAG, MUNCHEN, DE, vol. 78, no. 2, 1 février 1988 (1988-02-01), pages 151-153, XP002167842 ISSN: 0023-5563

## Description

L'invention concerne le domaine automobile et notamment la fabrication de pièces hybrides comprenant un corps métallique recouvert au moins partiellement de matière plastique.

Le métal est un matériau connu pour sa grande robustesse et son faible coût de fabrication. Il est pour cela couramment utilisé en automobile pour la fabrication de pièces telles qu'un toit ou un plancher de véhicule.

Il est connu également de surmouler partiellement des pièces métalliques pour les renforcer localement, pour éviter leur corrosion ou pour leur procurer des fonctions supplémentaires, par exemple des fonctions de fixation.

Le document US-A-2004/0232591 décrit un moule selon le préambule de la revendication 1.

Le document US 2007/0131012 divulgue un procédé de fabrication d'une pièce automobile consistant à introduire une zone périphérique d'un corps métallique dans la cavité d'un moule et à injecter de la matière thermoplastique dans le moule de manière à former un corps en matière plastique entourant la zone périphérique du corps métallique. On obtient ainsi une pièce hybride comprenant un corps métallique dont la périphérie est partiellement recouverte de plastique.

Ce procédé présente l'inconvénient que la pièce obtenue présente un risque de désolidarisation du corps en matière plastique d'avec le corps métallique, notamment lorsque les efforts auxquels la pièce automobile est confrontée sont importants.

Une solution connue à ce problème consiste à percer au préalable des orifices traversant le corps métallique au niveau de la zone périphérique de sorte que, lors du surmoulage de la zone par de la matière plastique, la matière plastique pénètre dans les orifices et forme ainsi des moyens de retenue de la matière plastique autour du corps métallique. Toutefois, ce procédé s'avère relativement long et coûteux à mettre en oeuvre du fait de l'étape préliminaire de perçage.

L'invention a notamment pour but de remédier à ces inconvénients.

A cet effet, l'invention a pour objet un moule de fabrication d'une pièce automobile comprenant un corps métallique dont au moins une zone périphérique est recouverte d'un corps en matière plastique, comprenant :
- au moins une cavité de moulage du corps en matière plastique, délimitée par des parois définissant la forme générale du corps en matière plastique,
- des butées, en saillie des parois, de positionnement du corps métallique au moins partiellement à distance des parois du moule, les butées étant agencées pour que lorsque le moule est en position fermée, elles contraignent la zone périphérique dans une forme qui, une fois la pièce fabriquée, empêche de déboîter le corps métallique du corps en matière plastique par translation ou rotation.

Grâce au moule de l'invention, il n'est pas nécessaire de mettre en oeuvre une étape préliminaire de perçage ou de formage du corps métallique avant son introduction dans le moule. En effet, le formage du corps métallique dans une forme adaptée à une bonne fixation avec le corps en plastique est réalisé lors de la fermeture du moule. Ainsi, la zone périphérique du corps métallique est retenue à l'intérieur du corps en matière plastique sans qu'il ait été nécessaire de réaliser des perforations préalables de cette zone.

La forme de la zone périphérique empêche de déboîter le corps métallique du corps en matière plastique par translation ou rotation. Or, les mouvements de translation et de rotation sont les seuls mouvements permettant de démouler ou déboîter sans effort une pièce mâle d'une pièce femelle complémentaire.

En d'autres termes, la forme du corps métallique imposée par les butées du moule de l'invention est telle que, une fois que le corps métallique est recouvert du corps en matière plastique de forme complémentaire de la forme du corps métallique, il ne peut pas être extrait du corps plastique par démoulage selon une direction de translation ou selon une rotation. Ainsi, si l'on souhaitait déboîter le corps en matière plastique du corps métallique, il serait nécessaire d'agir en force et de détériorer au moins l'un des deux corps. La forme du corps métallique s'oppose donc à son déboîtage du corps plastique.

Bien entendu, tout type de forme répondant à la définition de l'invention peut être utilisé pour la zone périphérique.

Un moule selon l'invention peut en outre comprendre l'une ou plusieurs des caractéristiques suivantes.
- Les butées du moule sont agencées pour contraindre la zone périphérique dans une forme telle que la zone est contenue dans au moins deux plans sécants. Ainsi, la zone est au moins localement plane en deux emplacements distincts et ces deux zones planes ne sont pas coplanaires. Une telle forme permet d'obtenir une zone périphérique qui ne peut pas être déboîtée du corps en matière plastique par translation ou rotation. Cette forme peut être obtenue simplement par pliage du corps métallique le long d'une arête.
- La zone périphérique comprenant deux surfaces opposées sensiblement parallèles et se rejoignant le long d'une bordure périphérique et sensiblement linéaire du corps métallique, la droite d'intersection des deux plans est sensiblement parallèle à la bordure périphérique. En d'autres termes, le bord externe de la zone périphérique est replié le long de la bordure de manière à former un bord replié.

- Les butées du moule sont agencées pour contraindre la zone périphérique dans une forme telle que la zone présente, en section dans au moins deux plans sécants selon une droit orthogonale à la zone, des ondulations. Ainsi, la zone périphérique du corps métallique comprend des ondulations selon plusieurs directions, ces ondulations empêchant de déboîter le corps métallique du corps plastique.
- Les butées sont conformées de sorte que la zone contrainte de la zone périphérique soit recouverte au moins partiellement du corps en matière plastique. On définit la zone contrainte comme la zone délimitant toutes les zones de contact du corps métallique avec les butées. Les butées sont conformées ainsi lorsqu'elles ne recouvrent pas totalement la zone contrainte de la zone périphérique une fois le moule fermé, de sorte que la matière plastique peut se frayer un passage entre les butées lors de son injection et recouvrir au moins en partie la zone contrainte. Cela permet d'obtenir l'effet désiré, c'est à dire d'éviter le déboîtage des corps métalliques et plastiques,
- Les butées sont fixes relativement à la paroi de la cavité de moulage. Cela permet de simplifier la conception du moule et d'économiser des coûts de fabrication,
- Les butées sont conformées de sorte que leur dimension selon la direction essentiellement normale à la paroi de la cavité de moulage dont elles font saillie est supérieure aux dimensions de la butée selon les directions appartenant à la paroi de la cavité de moulage. Ainsi, la section de la butée est limitée et, lorsque les butées sont fixes, la portion de la zone contrainte susceptible d'être recouverte de matière plastique est augmentée, ce qui permet également de diminuer les risques de déboîtage des corps plastique et métallique, Les butées sont de préférence quasi-ponctuelles,
- Le moule comprend une pluralité de butées, notamment au moins trois butées, identiques intersectant une même droite. Cela permet de contraindre le corps métallique uniformément sur toute une dimension de celui-ci, et ce même à l'aide de butées de section peu importante permettant un recouvrement important de la zone contrainte par la matière plastique,
- Le moule est conformé pour que ses parois délimitent, une fois le moule fermé, un espace communiquant avec la cavité de moulage et dimensionné pour recevoir le corps métallique de sorte que celui-ci soit en contact avec les deux parois délimitant l'espace, l'espace étant de préférence d'épaisseur inférieure à 2 cm, notamment 1 cm. Ainsi, le corps métallique n'est pas inséré tout entier dans la cavité de moulage. L'invention est particulièrement avantageuse dans ce cas En effet, le problème du déboîtage du corps métallique et du corps plastique ne se pose généralement pas lorsque le corps métallique est complètement entouré du corps plastique.

L'invention a également pour objet un procédé de fabrication d'une pièce automobile au moyen d'un moule tel que précédemment défini, la pièce comprenant une plaque métallique dont au moins une zone périphérique est recouverte d'un corps en matière plastique, le procédé comprenant les étapes suivantes :
- insertion d'une plaque métallique formant corps métallique dans le moule ouvert, la zone périphérique de la plaque étant située dans la cavité,
- fermeture du moule de manière à ce que les butées viennent en appui contre la zone périphérique de la plaque et la contraignent à se déformer pour adopter ladite forme,
- injection de matière plastique dans la cavité de moulage,
- démoulage de la pièce ainsi obtenue.

Ce procédé selon l'invention, mis en oeuvre grâce au moule précédemment défini, permet de fabriquer une pièce automobile de manière particulièrement simple et rapide car il suffit d'insérer une plaque métallique non formée dans le moule puis de fermer le moule de manière à procéder au formage de la plaque et à son surmoulage.

Un procédé selon l'invention peut en outre comprendre l'une ou plusieurs des caractéristiques suivantes.
- La zone périphérique de la plaque métallique insérée dans le moule ouvert est sensiblement plane.
- La zone périphérique de la plaque comprenant deux surfaces opposées sensiblement parallèles et se rejoignant le long d'une bordure périphérique de la plaque, on insère la plaque dans la cavité du moule de manière à ce que la matière plastique injectée dans la cavité recouvre au moins les deux surfaces opposées et la bordure périphérique. Ainsi, la zone périphérique est entourée sur trois côtés par de la matière plastique, ce qui favorise sa solidarisation.

L'invention sera mieux comprise à la lecture de la description qui va suivre, donnée uniquement à titre d'exemple et faite en se référant aux dessins annexés dans lesquels :
- la figure 1 est une vue du dessus d'une pièce automobile hybride selon l'invention réalisée à l'aide du moule de l'invention,
- les figures 2 et 3 sont des coupes selon un plan vertical d'un moule selon l'invention au cours de deux étapes du procédé de l'invention,
- la figure 4 est une vue en coupe selon un plan vertical du bord de la pièce représentée sur la figure 1,
- les figures 5 et 6 sont des vues selon des coupes verticales d'un moule selon une variante de l'invention.

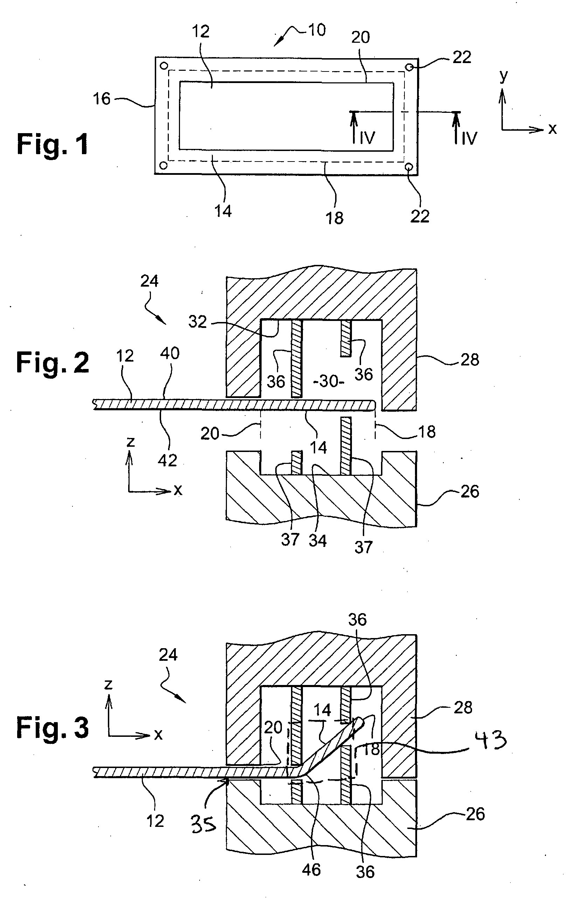

On a représenté sur la figure 1 une pièce automobile désignée par la référence générale 10, comprenant une plaque métallique 12 formant corps métallique, et comprenant une zone périphérique 14 recouverte d'un corps 16 en matière plastique. On note 18 la bordure externe de la plaque métallique 12 définissant une première frontière de la zone périphérique 14, et 20 la frontière interne de la zone périphérique 14, c'est-à-dire la limite de la zone de la plaque métallique 12 recouverte par la matière plastique 16. La plaque métallique 12 comprend deux surfaces opposées 40 et 42 se rejoignant au niveau de la bordure externe 18.

Le corps en matière plastique 16 comprend, venus de moulage, une pluralité de plots 22 de positionnement de la pièce automobile. D'autres éléments fonctionnels peuvent être venus de moulage avec le corps 16. Dans l'exemple représenté, la pièce automobile est un toit de véhicule. Toutefois, cette pièce peut également être par exemple un plancher.

On a représenté sur la figure 2 un moule 24 selon l'invention destiné à la fabrication de la pièce 10 de la figure 1. Ce moule 24 comprend deux demi-moules 26 et 28 mobiles l'un par rapport à l'autre en translation selon une direction verticale notée Z. On définit un repère XYZ orthogonal.

L'ensemble des deux demi-moules 28 et 26 définissent une cavité 30 de moulage de matière plastique autour de la zone périphérique 14 de la plaque métallique 12.

La cavité 30 est délimitée par une paroi supérieure 32 appartenant au demi-moule supérieur 28 et par une paroi inférieure 34 appartenant au demi-moule inférieur 26. Les parois 32 et 34 définissent la forme générale du corps 16 en matière plastique recouvrant la zone périphérique 14.

Comme on le voit sur la figure 3, les demi-moules 26, 28 sont conformés de sorte, qu'une fois le moule fermé, les parois 32, 34 de ces demi-moules 26, 28 délimitent un espace 35 pour recevoir une portion du corps métallique 14, cet espace communiquant avec la cavité de moulage. Les demi-moules sont conformés de sorte que cet espace 35 est juste de taille suffisante pour recevoir le corps métallique, ce dernier étant alors en contact avec les parois 32, 34 de chacun des demi-moules 26, 28. Pour ce faire, l'épaisseur de l'espace 35 correspond à celle du corps métallique 14, et est généralement inférieure à 2 cm, de préférence à 1 cm.

En outre, le moule 24 comprend, respectivement en saillie des parois 32 et 34, une pluralité de butées 36 et 37 de positionnement de la zone périphérique 14 de la plaque métallique 12, au moins partiellement à distance des parois 32 et 34 du moule. Les butées 36 en saillie de la paroi supérieure 32 sont en regard respectivement des butées 37 en saillie de la paroi inférieure 34. Ces butées sont d'un seul tenant relativement aux parois respectives 32, 34 de la cavité de moulage et sont fixes relativement à ces parois respectives.

Sur l'exemple représenté, les butées sont quasi ponctuelles, c'est-à-dire que la surface libre de la butée destinée à venir en contact avec la plaque métallique est de petites dimensions par rapport à la hauteur de la butée et par exemple de forme circulaire ou carrée. En d'autres termes, les butées sont conformées de sorte que leur dimension selon la direction essentiellement normale à la paroi de la cavité de moulage de laquelle elles font saillie (la direction verticale sur la figure) est supérieure aux dimensions de la butée selon les directions appartenant à la paroi de la cavité de moulage.

En variante, les butées peuvent présenter tout autre forme, notamment une forme de nervure dans laquelle la surface libre de la butée destinée à venir en contact avec la plaque métallique est allongée.

La hauteur des différentes butées de positionnement, par rapport aux parois 32 et 34 dont elles font saillie, n'est pas uniforme. Les butées 36 et 37 sont conformées de sorte que la somme des hauteurs de chaque couple de butées 36 et 37 en regard l'une de l'autre est sensiblement constant. Cette hauteur additionnée est sensiblement égale à la distance séparant les deux parois opposées 32 et 34 moins l'épaisseur de la plaque métallique 12. Cette plaque métallique présente une épaisseur comprise par exemple entre 0,6 millimètre et 0,8 millimètre.

On notera que pour déformer le corps métallique 14 sur toute la longueur de sa zone périphérique correspondant à la direction Y sur la figure, il est préférable que le moule comprennent une pluralité de butées identiques, notamment au moins trois butées, ces butées intersectant une même droite, s'étendant également selon la direction Y.

Le procédé de fabrication de la pièce 10 représentée sur la figure 1 va maintenant être décrit en référence aux figures 2 à 4.

Au cours d'une première étape représentée sur la figure 2, la plaque métallique 12 est insérée partiellement dans le moule 24 ouvert de sorte que la zone périphérique 14 soit située dans la cavité 30. On remarque que la bordure 18 de la plaque 12 est également située dans la cavité 30 de manière à ce que la matière thermoplastique injectée dans la cavité puisse recouvrir cette bordure.

La plaque métallique insérée dans le moule 24 est sensiblement plane. Cette plaque a par exemple été obtenue par laminage. En particulier, la zone périphérique 14 est sensiblement plane et ne présente aucun orifice traversant la plaque d'une surface 40 à l'autre surface 42.

Au cours d'une étape suivante représentée sur la figure 3, le moule 24 est fermé en rapprochant les deux demi-moules 28 et 26 l'un vers l'autre par translation selon la direction Z. Ce mouvement de fermeture du moule a pour effet que les butées 36 et 37 les plus longues entrent les premières en contact avec les surfaces respectives 40 et 42 de la zone périphérique 14 de la plaque 12.

Une fois que ces butées sont en contact avec la plaque, la poursuite de la fermeture du moule provoque une déformation de la zone périphérique de la plaque 12. Cette déformation peut également être qualifiée de mise sous contrainte ou d'emboutissage de la zone périphérique.

Une fois le moule totalement fermé, comme représenté sur la figure 3, la zone périphérique de la plaque 12 est mise en contrainte à la fois par les butées 36 et 37 de plus grande longueur et est également guidée en position par les butées 36 et 37 de plus petite longueur. La zone périphérique comprend plus particulièrement dans l'exemple une zone contrainte 43, visible sur la figure 3 et une zone non contrainte.

On constate donc que l'agencement des butées à l'intérieur de la cavité 30 du moule 24 détermine la forme finale occupée par la zone périphérique 14 une fois le moule fermé.

Dans une première variante de l'invention représentée sur la figure 3, cette zone périphérique est pliée le long d'une ligne de pliage 46 s'étendant sensiblement de manière rectiligne selon la direction Y, c'est-à-dire selon une direction sensiblement parallèle au bord 18 de la zone périphérique. La partie de la zone 14 située entre la ligne de pliage 46 et la bordure externe 18, ainsi que la partie située entre l'arête 46 et la bordure interne 20 sont sensiblement planes et appartiennent à deux plans sécants le long de la ligne de pliage 46. Ainsi, la fermeture du moule a permis de réaliser, en périphérie de la plaque 12, un bord replié.

Au cours d'une étape suivante, de la matière plastique est injectée à l'intérieur de la cavité 30 de manière à recouvrir totalement les deux faces 40 et 42 de la zone périphérique ainsi que sa bordure 18. La zone contrainte 43 est donc recouverte au moins partiellement de matière plastique, de même que la zone non contrainte.

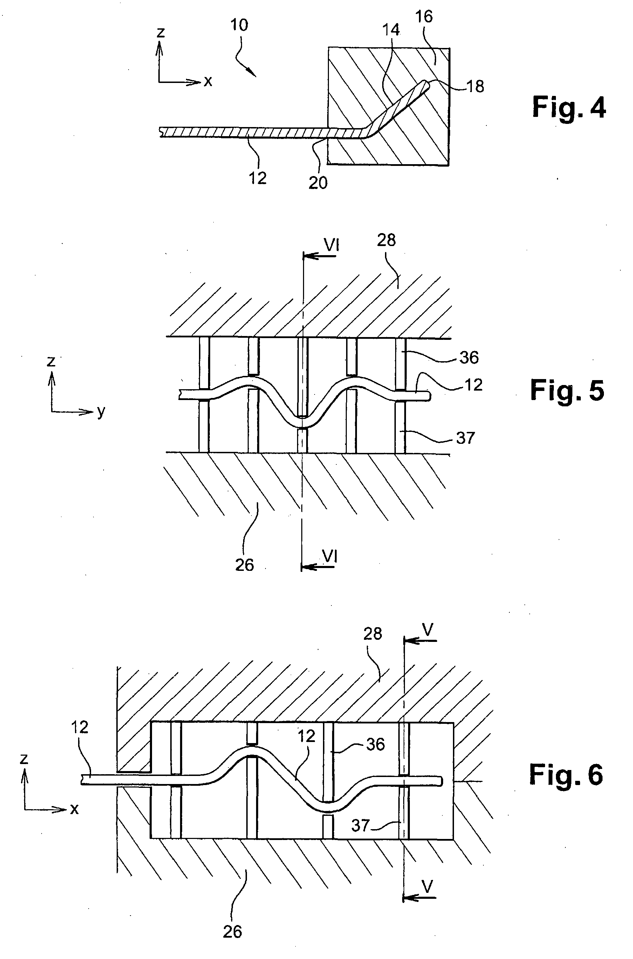

Enfin, au cours d'une étape suivante, la pièce 10 ainsi obtenue est démoulée du moule 24, comme représenté sur la figure 4.

Comme on peut le constater sur la figure 4, une fois la matière plastique moulée autour de la zone périphérique de la plaque 12, cette zone périphérique conserve la forme imposée par les butées 36 et 37 du moule, c'est-à-dire la forme de bords repliés.

Cette forme présente des inclinaisons qui sont telles qu'elles s'opposent au déboîtage du corps 16 en matière plastique et de la plaque métallique 12. Il est clair, à la vue de la figure 4, qu'il n'est pas possible de déboîter la plaque métallique 12 du corps en matière plastique 16 sans risquer de détériorer au moins partiellement la plaque 12 ou le corps 16. Les deux seuls mouvements qui permettraient un tel déboîtement sans détérioration de l'un ou l'autre des deux corps seraient un mouvement de translation ou un mouvement de rotation circulaire. Or, la forme de la zone périphérique 14 empêche l'un ou l'autre de ces mouvements.

Bien entendu, l'invention qui vient d'être décrite ne se limite pas au mode de réalisation représenté sur les figures 1 à 4.

En particulier, l'agencement des butées 36 et 37 dans le moule peut être modifié en fonction des besoins de manière à imposer à la zone périphérique 14 une forme prédéterminée qui s'opposerait au déboîtage de la plaque métallique 12 du corps en matière plastique.

A titre d'exemple, on a représenté sur les figures 5 et 6 une variante de l'invention dans laquelle les butées 36 et 37 imposent à la zone périphérique 14 une forme comprenant des creux et des bosses disposés en quinconce. Ainsi la forme de la zone 14 est ondulée, à la fois dans le plan Y-Z comme représenté sur la figure 5 et dans le plan X-Z comme représenté sur la figure 6. Cette ondulation de la zone périphérique 14 dans deux directions rend impossible le déboîtage du corps en matière plastique de la plaque métallique. Pour obtenir une telle forme de la zone périphérique 14, une façon consiste à munir chaque paroi respective de chaque demi-moule de butées ponctuelles disposées de sorte que les butées d'un demi-moule sont en quinconce par rapport aux butées de l'autre demi-moule. Une autre façon consiste à disposer des couples de butées en regard l'une de l'autre et portées respectivement par les deux demi-moules, et dont les hauteurs varient d'un couple à l'autre de manière à imposer les ondulations de la zone périphérique.

## Revendications

1. Moule (24) de fabrication d'une pièce automobile (10) comprenant un corps métallique (12) dont au moins une zone périphérique (14) est recouverte d'un corps (16) en matière plastique, **caractérisé en ce qu'**il comprend :
- au moins une cavité (30) de moulage du corps (16) en matière plastique, délimitée par des parois (32, 34) définissant la forme générale du corps (16) en matière plastique,
- des butées (36, 37), en saillie des parois (32, 34), de positionnement du corps métallique (12) au moins partiellement à distance des parois (32, 34) du moule (24), **caractérisé en ce que** les butées (36, 37) sont agencées pour que lorsque le moule (24) est en position fermée, elles contraignent la zone périphérique (14) dans une forme qui, une fois la pièce (10) fabriquée, empêche de déboîter le corps métallique (12) du corps en matière plastique (16) par translation ou rotation, de sorte que la zone périphérique du corps métallique est retenue à l'intérieur du corps en matière plastique sans qu'il ait été nécessaire de réaliser des perforations préalables de cette zone.

2. Moule (24) selon la revendication précédente, dans lequel les butées (36, 37) du moule (24) sont agencées pour contraindre la zone périphérique (14) dans une forme telle que la zone (14) est contenue dans au moins deux plans sécants.

3. Moule (24) selon la revendication précédente, dans lequel, la zone périphérique (14) comprenant deux surfaces opposées (40, 42) sensiblement parallèles et se rejoignant le long d'une bordure périphérique (18) et sensiblement linéaire du corps métallique (12), la droite d'intersection (46) des deux plans est sensiblement parallèle à la bordure périphérique (18).

4. Moule (24) selon l'une quelconque des revendications précédentes, dans lequel les butées (36, 37) du moule sont agencées pour contraindre la zone périphérique (14) dans une forme telle que la zone (14) présente, en section dans au moins deux plans sécants selon une droite orthogonale à la zone, des ondulations.

5. Moule selon l'une quelconque des revendications précédentes, dans lequel les butées (36, 37) sont conformées de sorte que la zone contrainte (43) de la zone périphérique soit recouverte au moins partiellement du corps en matière plastique (16).

6. Moule selon l'une quelconque des revendications précédentes, dans lequel les butées (36, 37) sont fixes relativement à la paroi (32, 34) de la cavité de moulage.

7. Moule selon l'une quelconque des revendications précédentes, dans lequel les butées (36, 37) sont conformées de sorte que leur dimension selon la direction essentiellement normale à la paroi (32, 34) de la cavité de moulage dont elles font saillie est supérieure aux dimensions de la butée selon les directions appartenant à la paroi de la cavité de moulage.

8. Moule selon l'une quelconque des revendications précédentes, comprenant une pluralité de butées (36; 37), notamment au moins trois butées, identiques intersectant une même droite

9. Moule selon l'une quelconque des revendications précédentes, conformé pour que ses parois (32, 34) délimitent, une fois le moule fermé, un espace (35) communiquant avec la cavité de moulage (30) et dimensionné pour recevoir le corps métallique (14) de sorte que celui-ci soit en contact avec les deux parois délimitant l'espace, l'espace (35) étant de préférence d'épaisseur inférieure à 2 cm.

10. Procédé de fabrication d'une pièce automobile (10) au moyen d'un moule (24) selon l'une quelconque des revendications précédentes, la pièce (10) comprenant une plaque métallique (12) dont au moins une zone périphérique (14) est recouverte d'un corps (16) en matière plastique, avec les étapes suivantes :
- insertion d'une plaque métallique (12) formant corps métallique dans le moule (24) ouvert, la zone périphérique (14) de la plaque (12), sensiblement plane et ne présentant aucun orifice traversant, étant située dans la cavité,
- fermeture du moule (24) de manière à ce que les butées (36, 37) viennent en appui contre la zone périphérique (14) de la plaque (12) et la contraignent à se déformer pour adopter ladite forme,
- injection de matière plastique dans la cavité de moulage (30),
- démoulage de la pièce (10) ainsi obtenue.

11. Procédé selon la revendication précédente, dans lequel la zone périphérique (14) de la plaque métallique (12) insérée dans le moule ouvert est sensiblement plane.

12. Procédé selon l'une quelconque des revendications 10 et 11, dans lequel, la zone périphérique (14) de la plaque (12) comprenant deux surfaces opposées (40, 42) sensiblement parallèles et se rejoignant le long d'une bordure périphérique (18) de la plaque (12), on insère la plaque (12) dans la cavité (30) du moule (24) de manière à ce que la matière plastique injectée dans la cavité (30) recouvre au moins les deux surfaces opposées (40, 42) et la bordure périphérique (18).

## Patentansprüche

1. Herstellungsform (24) eines Kraftfahrzeugteils (10), die einen Metallkörper (12) aufweist, von dem wenigstens eine umfängliche Zone (14) mit einem Körper (16) aus Kunststoff beschichtet ist, **dadurch gekennzeichnet, dass** sie Folgendes aufweist:
- wenigstens einen Hohlraum (30) zum Formen des Körpers (16) aus Kunststoff, abgegrenzt durch Wände (32, 34), die die allgemeine Form (16) aus Kunststoff definieren,
- Anschläge (36, 37), die aus den Wänden (32, 34) vorstehen, zum Positionieren des Metallkörpers (12) wenigstens teilweise von den Wänden (32, 34) der Form (24) entfernt, **dadurch gekennzeichnet, dass** die Anschläge (36, 37) eingerichtet sind, um, wenn die Form (24) in geschlossener Position ist, die umfängliche Zone (14) in eine Form zu zwängen, die, sobald das Teil (10) hergestellt ist, das Ausrasten des Metallkörpers (12) aus dem Kunststoffkörper (16) durch Verschieben oder Drehung verhindert, so dass die umfängliche Zone des Metallkörpers im Inneren des Kunststoffkörpers zurückgehalten wird, ohne dass es erforderlich wäre, zuvor Lochungen dieser Zone auszuführen.

2. Form (24) nach dem vorhergehenden Anspruch, bei der die Anschläge (36, 37) der Form (24) eingerichtet sind, um die umfängliche Zone (14) in eine Form derart zu zwängen, dass die Zone (14) in wenigstens zwei Schnittebenen enthalten ist.

3. Form (24) nach dem vorhergehenden Anspruch, bei der die umfängliche Zone (14) zwei gegenüberliegende Oberflächen (40, 42) aufweist, die im Wesentlichen parallel sind und entlang eines umfänglichen und im Wesentlichen linearen Rands (18) des Metallkörpers (12) aufeinandertreffen, wobei die Schnittgerade (46) der zwei Ebenen im Wesentlichen zu dem umfänglichen Rand (18) parallel ist.

4. Form (24) nach einem der vorhergehenden Ansprüche, bei der die Anschläge (36, 37) der Form eingerichtet sind, um die umfängliche Zone (14) in eine Form derart zu zwängen, dass die Zone (14) im Querschnitt in wenigstens zwei Schnittebenen entlang einer Geraden orthogonal zu der Zone Wellungen aufweist.

5. Form nach einem der vorhergehenden Ansprüche, bei der die Anschläge (36, 37) derart ausgebildet sind, dass die Zwangszone (43) der umfänglichen Zone wenigstens teilweise mit dem Kunststoffkörper (16) abgedeckt ist.

6. Form nach einem der vorhergehenden Ansprüche, bei der die Anschläge (36, 37) in Bezug auf die Wand (32, 34) des Formhohlraums stationär sind.

7. Form nach einem der vorhergehenden Ansprüche, bei der die Anschläge (36, 37) derart ausgebildet sind, dass ihr Maß entlang der im Wesentlichen senkrechten Richtung zu der Wand (32, 34) des Formhohlraums, aus welchen sie vorstehen, größer ist als die Maße des Anschlags entlang den Richtungen, die zu der Wand des Formhohlraums gehören.

8. Form nach einem der vorhergehenden Ansprüche, die eine Mehrzahl von Anschlägen (36; 37) aufweist, insbesondere wenigstens drei Anschläge, die identisch sind und ein und dieselbe Gerade schneiden.

9. Form nach einem der vorhergehenden Ansprüche, die ausgebildet ist, so dass ihre Wände (32, 34) nach dem Schließern der Form einen Raum (35) ausbilden, der mit dem Formhohlraum (30) in Verbindung und bemessen ist, um den Metallkörper (14) derart aufzunehmen, dass dieser mit den zwei Wänden, die den Raum abgrenzen, in Berührung ist, wobei der Raum (35) vorzugsweise eine Stärke kleiner als 2 cm hat.

10. Herstellungsverfahren eines Kraftfahrzeugteils (10) mittels einer Form (24) nach einem der vorhergehenden Ansprüche, wobei das Teil (10) eine Metallplatte (12) aufweist, von der wenigstens eine umfängliche Zone (14) mit einem Kunststoffkörper (16) abgedeckt ist, mit den folgenden Schritten:
- Einfügen einer Metallplatte (12), die einen Metallkörper in der offenen Form (24) bildet, wobei sich die umfängliche Zone (14) der Platte (12), die im Wesentlichen eben ist und keine durchgehende Öffnung aufweist, in dem Hohlraum befindet,
- Schließen der Form (24) derart, dass die Anschläge (36, 37) gegen die umfängliche Zone (14) der Platte (12) zum Aufliegen kommen und sie zwingen, sich zu verformen, um die Form anzunehmen,
- Einspritzen von Kunststoff in den Formhohlraum (30),
- Abformen des derart erzielten Teils (10).

11. Verfahren gemäß dem vorhergehenden Anspruch, bei dem die umfängliche Zone (14) der Metallplatte (12), die in die offene Form eingefügt ist, im Wesentlichen eben ist.

12. Verfahren nach einem der Ansprüche 10 und 11, bei dem die umfängliche Zone (14) der Platte (12) zwei gegenüberliegende Oberflächen (40, 42) aufweist, die im Wesentlichen parallel sind und entlang eines umfänglichen Rands (18) der Platte (12) aufeinandertreffen, man die Platte (12) in den Hohlraum (30) der Form (24) derart einfügt, dass der in den Hohlraum (30) eingespritzte Kunststoff wenigstens die zwei gegenüberliegenden Oberflächen (40, 42) und den umfänglichen Rand (18) abdeckt.

## Claims

1. Mould (24) for manufacturing an automobile part (10) comprising a metallic body (12) of which at least a peripheral area (14) is covered with a plastic body (16), **characterised in that** it comprises :
- at least one cavity (30) for the moulding of the plastic body (16), bounded by walls (32, 34) defining the general shape of the plastic body (16),
- abutments (36, 37), projecting from the walls (32, 34), for positioning the metal body (12) at least partially remote from the walls (32, 34) of the mould (24),
**characterised in that** the abutments (36, 37) are designed such that, when the mould (24) is in closed position, they constrain the peripheral area (14) into a shape that, once the part (10) is manufactured, prevents the dislodging of the metallic body (12) from the plastic body (16) by translation or rotation, so that the peripheral area (14) of the metallic body (12) is retained within the plastic body (16) without it was necessary to conduct preliminary perforations of this zone.

2. Mould (24) according to the preceding claim, wherein the abutments (36, 37) of the mould (24) are designed to constrain the peripheral area (14) into a shape such that the area (14) is contained in at least two intersecting planes.

3. Mould (24) according to the preceding claim, wherein the peripheral area (14) comprising two substantially parallel opposite surfaces (40, 42) and meeting along a peripheral and substantially linear border (18) of the metallic body (12), the line of intersection (46) of the two planes is substantially parallel to the peripheral border (18).

4. Mould (24) according to any of the preceding claims, wherein the abutments (36, 37) of the mould are designed to constrain the peripheral area (14) into a shape such that the area (14) has undulations in cross-section in at least two intersecting planes along a straight line perpendicular to the area.

5. Mould according to any of the preceding claims, wherein the abutments (36, 37) are shaped so that the constrained area (43) of the peripheral area is covered at least partially by the plastic body (16).

6. Mould according to any of the preceding claims, wherein the abutments (36, 37) are fixed relative to the moulding cavity wall (32, 34).

7. Mould according to any of the preceding claims, wherein the abutments (36, 37) are shaped so that their dimension in the direction substantially normal to the moulding cavity wall (32, 34) from which they project is greater than the abutment dimensions along the directions of the moulding cavity wall.

8. Mould according to any of the preceding claims, comprising a plurality of abutments (36, 37), especially at least three identical abutments intersecting the same straight line.

9. Mould according to any of the preceding claims, shaped such that once the mould is closed, its walls (32, 34) define a space (35) communicating with the moulding cavity (30) and designed to receive the metallic body (14) so that the latter is in contact with the two walls defining the space, the thickness of the space (35) preferably being less than 2 cm.

10. Method for manufacturing an automobile part (10) using a mould (24) according to any of the preceding claims, the part (10) comprising a metallic plate (12) of which at least a peripheral area (14) is covered with a plastic body (16), said method comprising the following steps:
- insertion of a metallic plate (12) forming a metallic body in the open mould (24), the peripheral area (14) of the plate (12) being located in the cavity,
- closure of the mould (24) so that the abutments (36, 37) come up against the peripheral area (14) of the plate (12), forcing it to deform to adopt said shape,
- injection of plastic material in the moulding cavity (30), demoulding of the part (10) so obtained.

11. Method according to the preceding claim, wherein the peripheral area (14) of the metallic plate (12) inserted in the open mould is substantially flat.

12. Method according to claim 10 and 11, wherein the peripheral area (14) of the plate (12) comprising two substantially parallel opposite surfaces (40, 42) and meeting along a peripheral border (18) of the plate (12), the plate (12) is inserted in the cavity (30) of the mould (24) so that the plastic material injected into the cavity (30) covers at least the two opposite surfaces (40, 42) and the peripheral border (18).
